# EUROPÄISCHE PATENTANMELDUNG

(11) **EP 1 876 101 A1**
(43) Veröffentlichungstag der Anmeldung: **09.01.2008**
(21) Anmeldenummer: 06013838.5
(22) Anmeldetag: 04.07.2006
(51) Int. Cl.: B65B 27/10, A01G 23/00

(54) **Vorrichtung zum Bündeln von Holzstücken**

(71) Anmelder: Landrock GmbH, 91233 Neunkirchen (DE)
(72) Erfinder: Schächle, Simon, 9492 Eschen (LU); Landrock, Martin, 91233 Neunkirchen (DE)
(74) Vertreter: Zech, Stefan Markus

(57) **Zusammenfassung**

Die Erfindung betrifft eine Vorrichtung (1) zum Bündeln von Holzstücken (2), insbesondere Scheitholz, in einer vorgebbaren Bündelform und Bündelgröße, wobei die Holzbündelungsvorrichtung (1) einen Bündelungsabschnitt (20) und einen Zufuhrabschnitt (10) aufweist. Dabei ist vorgesehen, dass der Zufuhrabschnitt (10) die zu bündelnden Holzstücke (2) dem Bündelungsabschnitt (20) zuführt, und dass der Bündelungsabschnitt (20) zumindest ein Halteelement (22) zum Anordnen der dem Bündelungsabschnitt (20) zugeführten Holzstücke (2) in einer vorgebbaren Bündelform aufweist. Mit dem Ziel, eine Holzbündelungsvorrichtung (1) anzugeben, bei der nahezu sämtliche Arbeitsschritte zum Herstellen des fertigen Holzbündels (4) maschinell durchführbar sind, und bei der das fertige Holzbündel (4) in einer möglichst kompakten Form vorliegt, ist erfindungsgemäß vorgesehen, dass der Zufuhrabschnitt (10) ausgelegt ist, die zu bündelnden Holzstücke (2) dem Bündelungsabschnitt (20) derart zuzuführen, dass die Holzstücke (2) bei der Zufuhr in der durch das zumindest eine Halteelement (22) definierten Bündelform zumindest teilweise umgelagert werden.

## Beschreibung

Die Erfindung betrifft eine Vorrichtung zum Bündeln von Holzstücken, insbesondere Scheitholz, in einer vorgebbaren Bündelform und Bündelgröße, wobei die Vorrichtung einen Bündelungsabschnitt und einen Zufuhrabschnitt aufweist, der Zufuhrabschnitt die zu bündelnden Holzstücke dem Bündelungsabschnitt zuführt, und wobei der Bündelungsabschnitt zumindest ein Halteelement zum Anordnen der dem Bündelungsabschnitt zugeführten Holzstücke in einer vorgebbaren Bündelform aufweist, wobei das zumindest eine Halteelement dabei die Umfangsfläche des herzustellenden Holzbündels definiert.

Mit zunehmend steigenden Kosten von herkömmlichen kohlenwasserstoffhaltigen Brennstoffen, insbesondere Erdgas und Erdöl, gewinnt Brennholz eine zunehmende Bedeutung, insbesondere im privaten Bereich. Um die Brennholzaufbereitung möglichst rationell und effektiv zu gestalten, ist es wünschenswert, vorgebbare Holzmengen in entsprechenden insbesondere handlichen Portionen zu bündeln, um somit für den Holztransport und -lagerung möglichst leicht handhabbare Gebinde zu haben. Dies gilt nicht nur für waldfrisches Brennholz, welches beispielsweise vor Ort portioniert und anschließend verladen und zum Trocknen eingelagert wird, sondern auch für bereits getrocknetes Brennholz, das für Heizzwecke als Holzvorrat vom Holzlieferanten beim Holzkäufer und Verbraucher angeliefert wird.

Aus dem Stand der Technik sind bereits Vorrichtungen zum Stapeln von Holzscheiten auf Paletten bekannt, mit welcher der Transport vom und die Lagerung beim Produzenten, Händler und Verbraucher vereinfacht wird. Bei diesen bekannten Lösungen ist gelegentlich vorgesehen, dass zunächst gespaltete Holzscheite oder auch ungespaltete Rundhölzer in liegender Lage innerhalb eines die äußere Kontur des zu erstellenden Bündels bestimmenden Käfigs manuell gestapelt werden, und dass anschließend manuell ein Spanngurt um die äußere Kontur des zu erstellenden Bündels gespannt wird. Dieser Spanngurt dient letztendlich dazu, das Holzbündel zusammenzuhalten.

Auch wenn die aus dem Stand der Technik bekannte Lösung zumindest teilweise zu einer rationelleren Aufbereitung von Brennholz führen mag, hat sich gezeigt, dass der Arbeitsaufwand zur Erzielung eines kompakten Bündels und zur Durchführung des Umreifens der in Bündelform angeordneten Holzstücke mit den Spanngurten relativ arbeitsaufwändig ist, da bei dieser Lösung in manueller weise der Spanngurt um das vom Käfig umschlossene und zusammengehaltene Scheiterbündel herumgelegt und anschließend ebenfalls in manueller Weise mit einem am Spanngurt befestigten Spannschloss zusammengezogen werden muss. Diese Arbeit ist relativ arbeitsaufwändig, teilweise ergonomisch unvorteilhaft und nicht zuletzt auch mit gewissen Gefahren verbunden.

Demnach liegt der Erfindung die Problemstellung zugrunde, dass bei der Herstellung von Brennholz eine Vielzahl von Arbeitsschritte anfallen, die üblicherweise häufig in manueller Weise auszuführen sind. Zu diesen durchzuführenden Arbeitsschritten gehört insbesondere das Zersägen des zu verarbeitenden Holzes (d.h. Stamm- oder Rundholz), das Weiterverarbeiten des zersägten Holzes zu Meterscheiten, der Transport der Meterscheite zum Trocknungsplatz, das Weiterverarbeiten der getrockneten Meterscheite beispielsweise zu Stückholz für Stückholz-Heizanlagen sowie das Bündeln des Stückholzes und der anschließende Transport des Stückholzes zum Endverbraucher. Auch wenn derzeit bereits Anlagen bekannt sind, mit denen maschinell so genannte "Sterbündel" hergestellt werden können, indem waldfrische Meterscheite parallel zueinander ausgerichtet und mit Stahl- oder Kunststoffbändern anschließend gebündelt werden, was den Einsatz von Maschinen beim Auf- bzw. Abladen zwischen den verschiedenen Bearbeitungsplätzen ermöglicht und somit den Arbeitsaufwand beim Anordnen der Meterscheite für die Trocknung im Vergleich zum herkömmlichen Stapeln loser Meterscheite reduziert, sind für den Transport des bereits getrockneten Brennholzes zum Endverbraucher nach wie vor viele manuelle Arbeitsschritte erforderlich, die letztendlich die Herstellung von Brennholz relativ kostenaufwändig gestalten.

In der EP 0 897 867 A1 ist eine Vorrichtung zum Stapeln und Bündeln von Stückholz gemäß dem Oberbegriff der vorliegenden Erfindung offenbart. Diese aus dem Stand der Technik bekannte Vorrichtung soll den Handhabungsaufwand des Transports des abgelenkten Stückholzes vom Ablenkplatz zum Lagerraum der Stückholzheizung reduzieren. Das Stapeln der zu bündelnden Holzscheite in liegender Lage innerhalb eines die äußere Kontur des zu erstellenden Bündels bestimmenden Käfigs erfolgt hierbei allerdings manuell, und zwar derart, dass die Holzstücke Schicht für Schicht in der Bündelform angeordnet werden. Das anschließende Umreifen des in Bündelform angeordneten Stückholzes für den Transport vom Ablenkplatz zum Endverbraucher muss ebenfalls nach wie vor von Hand erfolgen. Das bekannte System ist demnach entsprechend personalaufwändig und teilweise ergonomisch unvorteilhaft.

Aufgrund der Tatsache, dass beim Stand der Technik ferner die einzelnen Holzstücke per Hand in der mit den Halteelementen definierten Bündelform zu stapeln sind, indem bei diesem Arbeitsvorgang die zu bündelnden Holzstücke einzeln aufeinander geschichtet werden, um somit die durch die Halteelemente definierte Bündelform mit den Holzstücken aufzufüllen, erweist sich die bekannte Vorrichtung als relativ ineffizient. Der Nachteil einer derartigen, insbesondere in Handarbeit durchgeführten, geschichteten Anordnung der Holzstücke in der Bündelform ist neben der Ineffizienz insbesondere auch darin zu sehen, dass bei der geschichteten Anordnung der Holzstücke oftmals im hergestellten Holzbündel größere, nicht aufgefüllte Zwischenräume verbleiben, so dass letztendlich die in dem Holzbündel enthaltenen Holzstücke nicht kompakt angeordnet und somit das Holzbündel an sich relativ instabil ist.

Der Erfindung liegt daher die Aufgabe zugrunde, die Mängel des Standes der Technik zu beheben. Im einzelnen soll eine Vorrichtung zum Bündeln von Holzstücken angegeben werden, die ausgelegt ist, automatisch lose Holzstücke in einer vorgebbaren Bündelform und Bündelgröße zu bündeln, wobei gleichzeitig die in dem Holzbündel angeordneten Holzstücke mit möglichst wenig Zwischenraum vorliegen.

In diesem Zusammenhang sei darauf hingewiesen, dass in der vorliegenden Beschreibung unter dem Begriff "Holzstück" jedwede Holzstücke zu verstehen sind, beispielsweise auch Rund-, Schnitt- oder Kurzholz, welche eine Längserstreckung aufweisen und entweder zu Stückholz von vorbestimmten Längen abgelängt werden müssen oder bereits abgelängt sind. Insbesondere soll sich dieser Begriff nicht nur auf gespaltenes Stammholz und/oder auf Holzstücke von einem Meter Länge beschränken.

Des Weiteren sei darauf hingewiesen, dass unter dem hierin verwendeten Begriff "Holzbündel" im weitesten Sinne eine Vielzahl von parallel zu ihrer Längserstreckung ausgerichteten, senkrecht zu ihrer Längserstreckung einander berührend angeordnete Holzstücke zu verstehen ist, welche beispielsweise mit einem Bandmaterial zu einem runden, ovalen oder vieleckförmigen Bündel gebündelt sind. Insbesondere soll sich dieser Begriff nicht nur auf gebündelte Meterscheite oder auf Holzbündel beschränken, dessen Außenkontur einen Raummeter umschließt.

Die der Erfindung zugrunde liegende Aufgabe wird mit einer Vorrichtung der eingangs genannten Art dadurch gelöst, dass der Zufuhrabschnitt ausgelegt ist, die zu bündelnden Holzstücke dem Bündelungsabschnitt derart zuzuführen, dass die Holzstücke bei der Zufuhr in der durch das zumindest eine Halteelement definierten Bündelform zumindest teilweise umgelagert werden.

Die mit der erfindungsgemäßen Lösung erzielbaren Vorteile liegen auf der Hand: zum einen handelt es sich hierbei um ein System, welches insgesamt in einer automatisierten Weise nahezu selbständig Holzbündel erzeugt, insbesondere ohne dass hierzu Personal erforderlich ist. Zum anderen kann aufgrund der bei der Zufuhr der Holzstücke bewirkten Umlagerung dieser im Bündelungsabschnitt angeordneten Holzstücke ein besonders kompaktes Holzbündel erzeugt werden. Die Umlagerung der bereits in dem durch das zumindest eine Halteelement definierten Bündelform angeordneten Holzstücke bei der Zufuhr weiterer Holzstücke hat zur Folge, dass die sich in dem Bündelungsabschnitt befindlichen Holzstücke (in idealer Weise) kontinuierlich in Bewegung befinden, so dass - infolge der bei der Zufuhr und durch die Zufuhr der Holzstücke bewirkten Rüttelbewegung der in der Bündelform bereits angeordneten Holzstücke - das durch die mit dem zumindest einem Halteelement definierten Bündelform zur Verfügung stehende Bündelvolumen nahezu optimal ausgenutzt wird, so dass die in der Bündelform angeordneten Holzstücke, wenn überhaupt, nur mit den aufgrund der Geometrie der einzelnen Holzstücke erforderlichen Zwischenräumen in der Bündelform und somit in dem herzustellenden Holzbündel angeordnet sind.

Vorteilhafte Weiterentwicklungen der Erfindung sind in den Unteransprüchen angegeben.

In einer bevorzugten Realisierung der erfindungsgemäßen Lösung ist dabei vorgesehen, dass der Bündelungsabschnitt eine Zufuhröffnung aufweist, welche im unteren Bereich der durch das zumindest eine Halteelement definierten Bündelform vorgesehen ist, und durch welche die zu bündelnden Holzstücke dem Bündelungsabschnitt zugeführt werden. Anders ausgedrückt bedeutet dies, als dass die dem Bündelungsabschnitt zuzuführenden Holzstücke derart dem Bündelungsabschnitt zugeführt werden, dass die bereits in der durch das zumindest eine Halteelement definierten Bündelform angeordneten Holzstücke durch die dem Bündelungsabschnitt neu zugeführten Holzstücke umgelagert werden, da diese neu zugeführten Holzstücke dem Bündelungsabschnitt über eine im unteren Bereich der durch das zumindest eine Halteelement definierten Bündelform vorgesehenen Zufuhröffnung zugeführt werden und demnach beim Eintritt in den Bündelungsabschnitt von unten gegen die bereits im Bündelungsabschnitt angeordneten Holzstücke drücken und so eine bei der Zufuhr bzw. bei dem Eintritt in den Bündelungsabschnitt bewirkte Umlagerung der bereits im Bündelungsabschnitt angeordneten Holzstücke hervorrufen.

Unter dem hierin verwendeten Begriff "im unteren Bereich der durch das zumindest eine Halteelement definierten Bündelform" ist dabei ein Bereich zu verstehen, der bei der Befüllung der Bündelform im Durchschnitt unterhalb der Spiegeloberfläche liegt, d.h. ein Bereich, der während der Befüllung der Bügelform im zeitlichen Mittel unterhalb des Standes der in der Bügelform bereits angeordneten Holzstücke liegt. Dies trifft beispielsweise für einen hinsichtlich des herzustellenden Holzbündels zumindest mittig hierzu positionierten Bereich zu. Selbstverständlich gilt dies aber auch für einen Bereich, der am Bodenbereich der durch das zumindest eine Halteelement definierten Bündelform angeordnet ist, also unterhalb des für den hinsichtlich des herzustellenden Holzbündels mittig hierzu positionierten Bereiches.

Um zu erreichen, dass die dem Bündelungsabschnitt zuzuführenden Holzstücke derart dem Bündelungsabschnitt zugeführt werden, dass die bereits in der durch das zumindest eine Halteelement definierten Bündelform angeordneten Holzstücke durch die dem Bündelungsabschnitt neu zugeführten Holzstücke umgelagert werden können, ist es gemäß einer bevorzugten Ausführungsform der erfindungsgemäßen Lösung denkbar, dass der Zufuhrabschnitt ferner ein vorzugsweise pneumatisch oder hydraulisch arbeitendes Betätigungsmittel aufweist, welches ausgelegt ist, die zu bündelnden Holzstücke vorzugsweise in einer translatorischen und horizontale ausgerichteten Bewegung dem Bündelungsabschnitt zuzuführen. Hierbei handelt es sich um eine besonders einfach zu realisierende aber dennoch effektive Weise, bei der Zufuhr weiterer Holzstücke eine mittels eines automatischen Vorganges bewirkte Umlagerung der bereits im Bündelungsabschnitt angeordneten Holzstücke hervorzurufen. Einerseits ist der gemäß dieser Ausführungsform vorgesehene translatorisch und horizontal ausgerichtete Bewegungsvorgang zur Zufuhr der zu bündelnden Holzstücke besonders geeignet, um diesen Vorgang beispielsweise mit einem pneumatisch oder hydraulisch arbeitenden Betätigungsmittel, wie etwa mit einer entsprechend ausgelegten Preßstempel-Einrichtung umzusetzen, was insbesondere der Automatisierung entgegenkommt, andererseits darf nicht unberücksichtigt bleiben, dass trotz einer durch eine mit einem Betätigungsmittel bewirkten reinen translatorisch und horizontal ausgerichteten Bewegung der dem Bündelungsabschnitt zuzuführenden Holzstücke eine Umlagerung der bereits in der durch das zumindest eine Halteelement definierten Bündelform angeordneten Holzstücke bewirkt wird. Hierbei kann natürlich die Formgebung des Halteelements für die angestrebte Umlagerung unterstützend wirken. In der konkret vorgeschlagenen Ausführungsform definieren die Halteelemente einen im Wesentlichen trommelförmigen Innenraum, so dass einzelne Holzstücke an den gebogenen Außenflächen der Halteelemente entlang gleiten können und so von der vom Betätigungsmittel zunächst bewirkten translatorischen Bewegung in eine rotatorische Bewegung überführt werden können. Die Halteelemente definieren also dem Betätigungsmittel gegenüberliegend einen Rampenabschnitt, der die Holzstücke aus der rein translatorischen Bewegung des Betätigungsmittels ablenkt. Ein solcher Rampenabschnitt könnte auch bei einem Bündelungsabschnitt, der durch eine mehreckige Querschnittsform oder eine hiervon abweichende Querschnittsform definiert ist, vorgesehen sein.

In einer bevorzugten Weiterentwicklung im Hinblick auf eine vorzugsweise maschinell bewirkte Überführung eines Bandmaterials auf die Umfangsfläche der durch das zumindest eine Halteelement vorgegebene Bündelform, und somit im Hinblick auf eine vorzugsweise maschinell bewirkte Längs-Umreifung der durch den vorstehend beschriebenen Umlagerungsprozess möglichst platzsparend in der Bündelform angeordneten Holzstücke ist vorgesehen, dass der Bündelungsabschnitt ferner an zumindest einer der beiden Stirnseiten der durch das zumindest eine Halteelement vorgegebenen Bündelform ein Seitenwangenelement mit einem Bandüberführungsmittel aufweist, wobei die dem zumindest einem Halteelement zugewandte Stirnseite des Seitenwangenelements im wesentlichen die gleiche Formgebung wie die Querschnittsformgebung der durch das zumindest eine Halteelement vorgegebenen Bündelform aufweist, und wobei das Bandüberführungsmittel derart ausgelegt ist, ein in einer geschlossenen Formgebung um die dem Halteelement zugewandten Stirnseite des Seitenwangenelements angeordnetes Bandmaterial auf die Umfangsfläche der durch das zumindest eine Halteelement vorgegebene Bündelform zu überführen und somit eine Längs-Umreifung der im Bündelungsabschnitt angeordneten Holzstücke zu bewirken.

Die Kernidee dieser Weiterentwicklung liegt somit darin, dass die Längs-Umreifung der in dem Bündelungsabschnitt durch Umlagerung platzsparend und kompakt angeordneten Holzstücke nun auch nicht mehr von Hand zusammengebunden werden müssen, da dies hier mit dem Bandüberführungsmittel an dem jeweiligen Seitenwangenelement erfolgt. Demnach kann die Längs-Umreifung der in dem Bündelungsabschnitt angeordneten Holzstücke auch maschinell und insbesondere mit geringerem Zeitaufwand und nahezu ohne zusätzliches Hilfspersonal durchgeführt werden.

In einer besonders bevorzugten Realisierung des Bündelungsabschnittes der erfindungsgemäßen Vorrichtung ist vorgesehen, dass das Bandmaterial in einer geschlossenen Formgebung um die dem Halteelement zugewandte Stirnseite des Seitenwangenelements angeordnet ist, wobei die Querschnittsfläche des angeordneten Bandmaterials zumindest so groß wie die Querschnittsfläche der durch das zumindest eine Halteelement vorgegebenen Bündelform ist, und wobei die Querschnittsfläche des Bandmaterials nach dem Überführen auf die Umfangsfläche der durch das zumindest eine Halteelement vorgegebenen Bündelform durch Nachspannen des Bandmaterials verkleinerbar ist. Anders ausgedrückt bedeutet dies, dass bei der erfindungsgemäßen Lösung zunächst die zu bündelnden Holzstücke unter Zuhilfenahme des Zufuhrabschnittes und der Halteelemente in einer mit den Halteelementen vorgegebenen Bündelform angeordnet und gehalten werden, wobei anschließend das zumindest eine Seitenwangenelement zum Einsatz kommt und ein Überführen des Bandmaterials auf die Umfangsfläche der Bündelform ermöglicht. Dadurch, dass erfindungsgemäß die dem zumindest einen Halteelement zugewandte Stirnseite des Seitenwangenelements im wesentlichen die gleiche Formgebung wie die Querschittsformgebung der durch das zumindest eine Halteelement vorgegebenen Bündelform aufweist, und da des weiteren gemäß der bevorzugten Realisierung die Querschnittsfläche des um die Stirnseite des Seitenwangenelements angeordneten Bandmaterials zumindest so groß wie die Querschnittsfläche der Bündelform ist, genügt es zum Überführen des Bandmaterials auf die Umfangsfläche der Bündelform lediglich ein Verschieben des Bandmaterials in Längsrichtung der durch das zumindest eine Halteelement vorgegebenen Bündelform. Anschließend kann das Bandmaterial nachgespannt werden, beispielsweise unter Einsatz einer entsprechenden Spannvorrichtung, so dass das Bandmaterial in vorteilhafter Weise unter Vorspannung an der Umfangsfläche der Bündelform anliegt und eine effektive Längs-Umreifung des somit hergestellten Holzbündels ermöglicht. Als nachspannbares Bandmaterial käme hierfür beispielsweise ein Spanngurt oder dergleichen in Frage, der entweder maschinell oder manuell nach seiner Überführung auf die Umfangsfläche der Bündelform entsprechend nachgespannt werden kann.

In einer besonders bevorzugten Verwirklichung der erfindungsgemäßen Vorrichtung ist als Bandmaterial ein elastisches Bandmaterial, insbesondere Gummimaterial oder dergleichen vorgesehen, welches in einer geschlossenen Formgebung um die dem Halteelement zugewandten Stirnseite des Seitenwangenelements bereits unter einer gewissen Vorspannung aufgespannt ist. Des Weiteren wäre es denkbar, dass die Querschnittsfläche des aufgespannten Bandmaterials größer als die Querschnittsfläche der durch das zumindest eine Halteelement vorgegebenen Bündelform ist. Dann nämlich kann das Überführen des Bandmaterials von dem Seitenwangenelement auf die Umfangsfläche der durch das zumindest eine Halteelement vorgegebenen Bündelform einfach durch ein "Aufschnappen" des vorgespannten Bandmaterials erfolgen. Anders ausgedrückt erfolgt hier die Längs-Umreifung der Bündelform in einer ähnlichen Weise, wie zum Beispiel aus dem Haushalt bekannt ein Gummiband oder dergleichen per Hand über die Öffnung eines Gefäßes gezogen wird. Die für das Überführen des elastischen Bandmaterials auf die Umfangsfläche der Bündelform notwendigen Schritte sind demnach im wesentlichen das Vorspannen des elastischen Bandmaterials derart, dass der Durchmesser des in einer geschlossenen Formgebung vorliegenden Bandmaterials größer als die Querschnittsfläche der Bündelform ist, wobei anschließend durch eine geeignete Manipulation des Bandüberführungsmittels das Bandmaterial von dem Seitenwangenelement freigegeben wird, teilweise kontrahiert und sich gleichzeitig nach wie vor unter einer gewissen Vorspannung an der Außenumfangsfläche der Bündelform anlegt.

Alternativ oder zusätzlich zu der zuletzt genannten bevorzugten Realisierung wäre es ferner denkbar, dass das Bandmaterial ein Kunststoff- und/oder Stahlmaterial aufweist, wobei das Bandmaterial in einer geschlossenen Formgebung um die dem Halteelement zugewandte Stirnseite des Seitenwangenelement aufgespannt ist und wobei die Querschnittsfläche der Formgebung des aufgespannten Bandmaterials im wesentlichen identisch mit der Querschnittsfläche der durch das zumindest eine Halteelement vorgegebenen Bündelform ist. Auch in diesem Fall nämlich ist es durch eine geeignete Manipulation des Bandüberführungsmittels möglich, auf einfach und insbesondere im wesentlichen maschinell bewirkte Weise eine Überführung des Bandmaterials auf die Umfangsfläche der durch das zumindest eine Halteelement vorgegebenen Bündelform möglich.

Noch bevorzugter allerdings ist bei der zuletzt genannten Ausführungsform das zumindest eine Halteelement derart ausgelegt, um auf die in dem Bündelungsabschnitt angeordneten Holzstücke zumindest zeitweilig eine radial ausgerichtete Druck- bzw. Presskraft auszuüben, um zum Zwecke der Überführung des Bandmaterials kurzzeitig die Querschnittsfläche der vorgegebenen Bündelform zu reduzieren. Dies führt nicht nur zu einer vereinfachten Längs-Umreifung der in Bündelform angeordneten Holzstücke sondern auch dazu, dass in dem letztendlich hergestellten Holzbündel die einzelnen Holzstück besonders platzsparend und kompakt vorliegen.

Allgemein ausgedrückt sollte insbesondere das Bandüberführungsmittel dahingehend ausgelegt sein, die Querschnittsfläche des in einer geschlossenen Formgebung um die dem Halteelement zugewandte Stirnseite des Seitenwangenelements zwischen einem ersten Wert und einem zweiten Wert zu variieren, wobei der erste Wert im wesentlichen der Querschnittsfläche der durch das zumindest eine Halteelement vorgegebenen Bündelform ist, und wobei der zweite Wert größer als der erste Wert ist.

Hinsichtlich des Bandüberführungsmittels ist dabei bevorzugt, dass dieses zumindest eine Bandführung, insbesondere eine Bandaufnahmenut oder dergleichen aufweist, in welcher das als Längs-Umreifung zum Einsatz kommende Bandmaterial in einer geschlossenen Formgebung eingelegt wird, und wobei das Bandführungsmittel des weiteren Freigabemittel aufweist, die entsprechend ausgelegt sind, um das in der Bandführung angeordnete Bandmaterial freizugeben und eine Überführung des Bandmaterials von der Bandführung auf die Umfangsfläche der Bündelform zu ermöglichen.

Auch wenn, wie eingangs bereits angedeutet, mit der erfindungsgemäßen Vorrichtung auch Holzbündel herstellbar sind, die eine ovale oder vieleckförmige Querschnittsformgebung aufweisen, ist es bevorzugt, dass die durch das zumindest eine Halteelement vorgegebene Bündelform im wesentlichen kreiszylindrisch ist, was insbesondere auch die Handhabung des fertigen Holzbündels, wie zum Beispiel die Entnahme des fertigen Holzbündels aus dem Bündelungsabschnitt erleichtert, da dieser Arbeitsschritt nun durch ein entsprechendes Abrollen des Holzbündels möglich ist. Selbstverständlich sind aber auch andere Formgebungen der Bündelform und andere Arten der Entnahme des fertigen Holzbündels aus dem Bündelungsabschnitt möglich. Diesbezüglich sei darauf hingewiesen, dass in dem Holzbündel entsprechende Aufgreifmittel eingearbeitet werden können, in die beispielsweise ein Gabelstapler eingreifen kann, um somit das Holzbündel aus dem Bündelungsabschnitt zu entnehmen.

In einer bevorzugten Realisierung des zumindest einen Halteelements ist vorgesehen, dass dieses wenigstens aus zwei vorzugsweise gelenkig miteinander verbundenen Haltegliedern besteht, wobei des weiteren ein vorzugsweise hydraulisch oder pneumatisch arbeitendes Betätigungsmittel, wie etwa ein Hydraulikzylinder etc. vorgesehen ist. Dabei sind die Halteglieder des Halteelements mit dem Betätigungsmittel relativ zueinander zwischen einer ersten Position, in welcher das Halteelement mit den Haltegliedern die Bündelform definiert, und einer zweiten Position, in welcher das Halteelement mit den Haltegliedern auf die dem Bündelungsabschnitt angeordneten Holzstücke eine radial ausgerichtete Druck- bzw. Presskraft ausübt, bewegbar und vorzugsweise in einer vorgegebenen Kreisbewegung verschwenkbar. Die zweite Position, bei welcher das Halteelement auf die Holzstücke eine entsprechende Presskraft aufübt, ist demnach die Position, bei welcher der Querschnitt der durch das zumindest eine Halteelement vorgegebenen Bündelform von dem ursprünglichen Querschnitt verkleinert ist, um somit beispielsweise ein Umreifen der Bündelform mit dem Bandmaterial zu vereinfachen.

In einer Weiterentwicklung der zuletzt genannten bevorzugten Realisierung des zumindest einen in der erfindungsgemäßen Vorrichtung zum Einsatz kommenden Halteelements ist vorgesehen, dass die Halteglieder mit dem Betätigungsmittel ferner in eine dritte Position relativ zueinander bewegbar sind, um die in dem Bündelungsabschnitt angeordneten Holzstücke nach deren Längs-Umreifung freizugeben und eine Entnahme des Holzbündels aus dem Bündelungsabschnitt zu ermöglichen. Diese dritte Position entspricht demnach einer Position, innerhalb welcher das Halteelement durch beispielsweise Verschwenken eines der Halteglieder aufgeklappt ist, um somit das fertige Holzbündel freizugeben.

Hinsichtlich der Ausrichtung des zumindest einen Seitenwangenelements zu dem zumindest einen Halteelement sei abschließend erwähnt, dass in bevorzugter Weise die Querschnittsfläche des in einer geschlossenen Formgebung um die dem Halteelement zugewandten Stirnseite des Seitenwangenelements angeordneten Bandmaterials symmetrisch zur Querschnittsfläche der durch das zumindest eine Halteelement vorgegebenen Bündelform ist. Selbstverständlich wäre es hierbei aber auch denkbar, eine asymmetrische bzw. versetzte Anordnung der jeweiligen Querschnittsfläche vorzusehen.

Um zu erreichen, dass nicht nur die Umreifung der in Bündelform angeordneten Holzstücke automatisch bzw. maschinell erfolgt, ist in einer weiteren besonderes bevorzugten Realisierung der erfindungsgemäßen Vorrichtung gemäß einer der zuvor genannten Ausführungsformen vorgesehen, dass der Zufuhrabschnitt einen Ausrichtungsabschnitt aufweist, in welchem die zu bündelnden Holzstücke hinsichtlich ihrer Längsausrichtung ausgerichtet werden, wobei des weiteren der Zufuhrabschnitt einen im Bündelungsabschnitt mündenden Einschubkanal aufweist, über den die ausgerichteten Holzstücke in einer translatorischen und horizontale ausgerichteten Bewegung dem Bündelungsabschnitt zugeführt werden.

Besonders bevorzugt ist bei dieser Ausführung des Zufuhrabschnittes vorgesehen, dass der Zufuhrabschnitt ferner ein vorzugsweise pneumatisch oder hydraulisch arbeitendes Betätigungsmittel aufweist, welches die ausgerichteten Holzstücke durch den Einschubkanal in den Bündelungsabschnitt überführt.

Hinsichtlich einer bevorzugten Realisierung des Ausrichtungsabschnittes wäre es denkbar, zumindest eine Anschlagplatte vorzusehen, gegen welche die zu bündelnden Holzstücke jeweils mit ihrem einen Enden anstoßen und derart ausgerichtet werden. Derartige Anschlagplatten sind an sich aus dem Stand der Technik bekannt und werden hierin nicht näher erläutert. Allerdings sei darauf hingewiesen, dass selbstverständlich auch andere Ausführungen des Ausrichtungsabschnittes denkbar sind.

Letztendlich führt das Vorsehen eines Förderbandes oder dergleichen, über welches die zu bündelnden Holzstücke dem Ausrichtungsabschnitt zugeführt werden zu einer voll automatisierten Anlage zur Bündelung von Stückholz. Bevorzugt weist dabei der Ausrichtungsabschnitt einen Falltrichter auf, dessen unteres Ende mit dem Einschubkanal verbunden ist, und an dessen oberen Ende die Anschlagplatte vorgesehen ist, so dass automatisch die über das Förderband zugeführten Holzstücke beim Eintritt in den Falltrichter an der Anschlagplatte ausgerichtet und anschließend dem Einschubkanal zugeführt werden. Hierbei handelt es sich um eine mögliche Realisierung einer automatischen Bündelungsvorrichtung bei welcher die zu bündelnden Holzstücke im Bündelungsabschnitt durch Umlagerung angeordnet werden. Selbstverständlich sind aber auch andere Ausführungsformen im Hinblick auf das Zuführen und des Ausrichtens des zu bündelnden Stückholzes denkbar.

Die vorliegende Erfindung zeichnet sich auch durch ein Verfahren zum Bündeln von Holzstücken, insbesondere Scheitholz aus, wobei in einem Zufuhrabschnitt die zu bündelnden Holzstücke zugeführt und in einen Bündelungsabschnitt überführt werden, wobei bei der - vorzugsweise automatischen - Zuführung der zu bündelnden Holzstücke in dem Bündelungsabschnitt eine Umlagerung, insbesondere mit einer Rotationskomponente, der bereits in der Bündelform befindlichen Holzstücke bewirkt wird. In einer Weiterbildung des Verfahrens wird eine translatorische Presskraft auf die in dem Bündelungsabschnitt überführten Holzstücke ausgeübt.

Neben dem Verfahren zum Bündeln von Holzstücken wird ergänzend auch das Bandmaterial zur Verwendung in der erfindungsgemäßen Vorrichtung nach den Ansprüchen 1 bis 18 beansprucht.

Im Folgenden wird eine besonders bevorzugte Ausführungsform der erfindungsgemäßen Vorrichtung anhand der beigefügten Zeichnungen näher erläutert.

Es zeigen:
- Fig. 1: eine Seitenansicht in Richtung parallel der Längserstreckung der zu bündelnden Holzscheite einer bevorzugten Ausführungsform der erfindungsgemäßen Vorrichtung;
- Fig. 2: eine Seitenansicht in Richtung senkrecht der Längserstreckung der zu bündelnden Holzscheite der in Fig. 1 gezeigten bevorzugten Ausführungsform der erfindungsgemäßen Vorrichtung;
- Fig. 3: eine Draufsicht der in Fig. 1 und Fig. 2 dargestellten Ausführungsformen der erfindungsgemäßen Vorrichtung; und
- Fig. 4a-d: jeweils eine Seitenansicht in Richtung parallel der Längserstreckung der zu bündelnden Holzscheite der bevorzugten Ausführungsform der erfindungsgemäßen Vorrichtung in unterschiedlichen Arbeitszuständen.

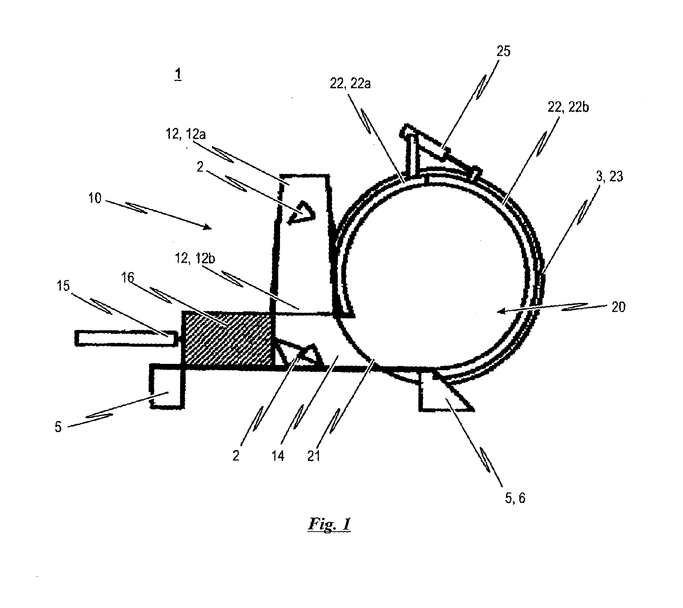

Im Folgenden wird zunächst unter Bezugnahme auf die Figuren 1 bis 3 eine bevorzugte Ausführungsform der erfindungsgemäßen Vorrichtung zum Bündeln von Holzstücken (nachfolgend kurz: "Holzbündelungsvorrichtung" genannt) erläutert. Die Holzbündelungsvorrichtung 1 weist im wesentlichen einen Zufuhrabschnitt 10 sowie einen Bündelungsabschnitt 20 auf. Der Zufuhrabschnitt 10 dient in erster Linie dazu, die zu bündelnden Holzstücke 2 dem Bündelungsabschnitt 20 zuzuführen. Im weiteren Sinne übernimmt der Zufuhrabschnitt 10 des weiteren die Funktion der Längsausrichtung der zu bündelnden Holzstücke 2, und zwar bevor diese dem Bündelungsabschnitt 20 zugeführt werden. Im Bündelungsabschnitt 20 selber werden die vorzugsweise bereits ausgerichteten Holzstücke 2 durch einen bei der Zufuhr in den Bündelungsabschnitt bewirkten Umlagerungsprozess in einer vorgebbaren Bündelform und Bündelgröße gesammelt und anschließend mit einem Bandmaterial 3 umreift. Die umreiften und in Bündelform angeordneten Holzstücke 20 bilden letztendlich das fertige Holzbündel 4.

Im einzelnen weist der Zufuhrabschnitt 10 im wesentlichen ein Förderband 11, einen Falltrichter 12 sowie einen Einschubkanal 14 auf. Über das Förderband 11 werden die zu bündelnden und noch nicht ausgerichteten Holzstücke 2 dem Falltrichter 12 zugeführt. Um eine Ausrichtung hinsichtlich der Längsausdehnung der zugeführten Holzstücke 2 zu erreichen, ist am oberen Ende 12a des Falltrichters 12 eine Anschlagplatte 13 vorgesehen, gegen welche die über das Förderband 11 zugeführten Holzstücke 2 jeweils mit ihrem Kopfabschnitt anstoßen und somit eine hinsichtlich der Längsausrichtung der Holzstücke 2 bewirkte Ausrichtung erfahren. Anschließend fallen die ausgerichteten Holzstücke 2, geführt durch die Seitenwandungen des Falltrichters 12, zum unteren Ende 12b des Falltrichters 12, der im Einschubkanal 14 mündet.

In Fig. 1 ist ein Zustand gezeigt, in welchem sich zwei Holzstücke 2 am unteren Ende 12b des Einschubkanals 14 befinden, während ein drittes Holzstück 2 gerade an der (in Fig. 1 nicht explizit dargestellten Anschlagplatte 13) anstößt und somit in Längsrichtung ausgerichtet wird.

Nachdem im Einschubkanal 14 zumindest ein in Längsrichtung ausgerichtetes Holzstück 2 über den Falltrichter 12 zugeführt wurde, wird ein dem Zufuhrabschnitt 10 zugeordnetes Betätigungsmittel, insbesondere ein pneumatisch oder hydraulisch arbeitender Betätigungszylinder aktiviert, der einen Einschubschlitten 16 in Richtung der Öffnung 21 des Bündelungsabschnittes 20 bewegt. Durch diese mit dem Betätigungszylinder 15 bewirkte Bewegung des Einschubschlittens 16 werden die im Einschubkanal 14 vorliegenden und in Längsrichtung ausgerichteten Holzstücke 2 mit einer translatorischen und horizontal ausgerichteten Bewegung in den Bündelungsabschnitt 20 geschoben. Selbstverständlich sind hier aber auch andere Lösungen hinsichtlich der Zufuhr der im Einschubkanal 14 vorliegenden Holzstücke 2 denkbar.

Der Betätigungszylinder 15 kann entweder manuell oder aber auch automatisch initiiert werden. Bei der automatischen Initiierung des Betätigungszylinders 15 bietet sich das Vorsehen entsprechender Sensoren im Einschubkanal 14 an, die das Vorhandensein bzw. das Fehlen von Holzstücken 2 im Einschubkanal 14 detektieren und ein entsprechendes Signal an eine (nicht dargestellte) Steuerung abgeben, infolgedessen das Betätigungsmittel 15 aktiviert bzw. deaktiviert wird.

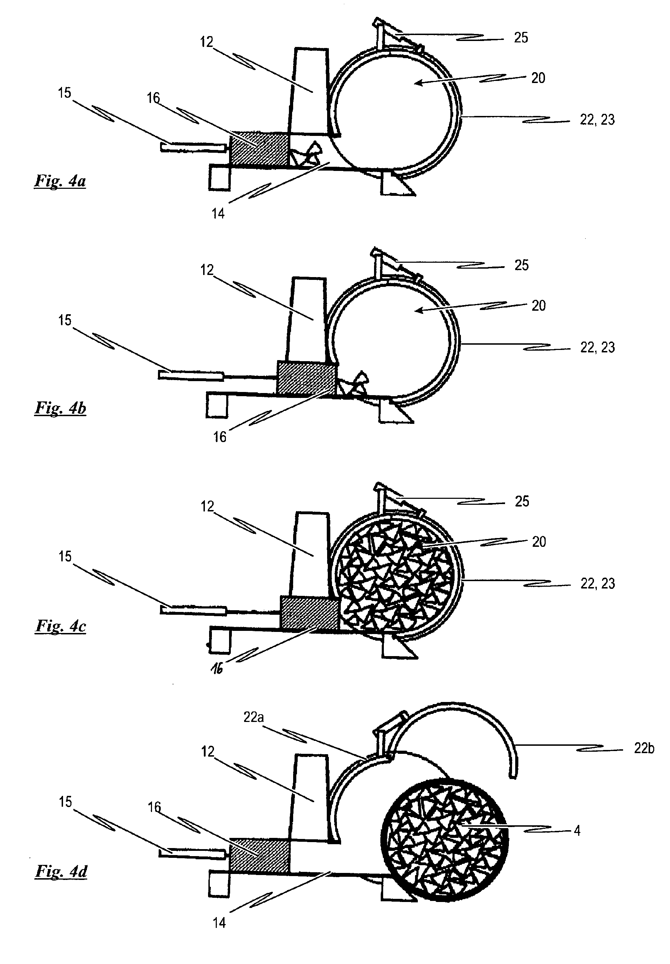

Wesentlich ist, dass die für die Zufuhr der zu bündelnden Holzstücke 2 in den Bündelungsabschnitt 20 funktionell tätig werdenden Komponenten des Zufuhrabschnittes 10, d.h. das Betätigungsmittel 15, 16 und der Einschubkanal 14, und die Öffnung 21 des Bündelungsabschnittes 20, durch welche die Holzstücke 2 dem Bündelungsabschnitt 20 zugeführt werden derart ausgelegt sind, dass bei der Zufuhr der Holzstücke 2 eine Umlagerung der bereits im Bündelungsabschnitt 20 angeordneten Holzstücke 2 bewirkt wird, um somit ein besonders kompaktes Holzbündel 4 herstellen zu können. Die Umlagerung der bereits in dem durch die beiden Halteelemente 22 definierten Bündelform angeordneten Holzstücke 2 bei der Zufuhr weiterer Holzstücke 2 hat zur Folge, dass die sich in dem Bündelungsabschnitt befindlichen Holzstücke nahezu kontinuierlich in Bewegung befinden, so dass - infolge der bei der Zufuhr und durch die Zufuhr der Holzstücke 2 bewirkten Rüttelbewegung der in der Bündelform bereits angeordneten Holzstücke 2 - das durch die mit den Halteelementen 22 definierten Bündelform zur Verfügung stehende Bündelvolumen nahezu optimal ausgenutzt wird, so dass die in der Bündelform angeordneten Holzstücke 2, wenn überhaupt, nur mit den aufgrund der Geometrie der einzelnen Holzstücke 2 erforderlichen Zwischenräumen in der Bündelform und somit in dem herzustellenden Holzbündel 4 angeordnet sind. Die Wirkungsweise dieser zuvor beschriebenen Umlagerung ist insbesondere anhand der in Fig. 4a bis Fig.4d gezeigten Ablauffolge zu erkennen.

Im einzelnen ist dabei vorgesehen, dass der Bündelungsabschnitt 20 eine im unteren Bereich der Bündelform vorgesehene Zufuhröffnung 21 aufweist, durch welche die zu bündelnden Holzstücke 2 dem Bündelungsabschnitt 20 bzw. der Bündelform zugeführt werden. Unter Bezugnahme auf die in Fig. 4a bis Fig.4d gezeigten Ablauffolge werden somit die dem Bündelungsabschnitt 20 zuzuführenden Holzstücke 2 mit dem Betätigungsmittel 15, 16 und dem Einschubkanal 14 derart dem Bündelungsabschnitt 20 zugeführt, dass die bereits in der Bündelform angeordneten Holzstücke 2 durch die dem Bündelungsabschnitt 20 neu zugeführten Holzstücke 2 umgelagert werden, da diese neu zugeführten Holzstücke 2 beim Eintritt in den Bündelungsabschnitt 20 von unten gegen die bereits im Bündelungsabschnitt 20 angeordneten Holzstücke 2 drücken und so eine bei der Zufuhr bzw. bei dem Eintritt in den Bündelungsabschnitt 20 bewirkte Umlagerung der bereits im Bündelungsabschnitt 20 angeordneten Holzstücke 2 hervorrufen.

Der Fachmann erkennt dabei, dass der vorzugsweise pneumatisch oder hydraulisch arbeitend Betätigungszylinder 15 letztendlich derart ausgelegt sein muss, um die Holzstücke 2 nicht nur bloß dem Bündelungsabschnitt 20 zuzuführen; vielmehr ist es erforderlich, dass der Betätigungszylinder 15 eine entsprechend Druckkraft auf den Einschubschlitten 16 ausüben kann, um neu zuzuführende Holzstücke 2 beim Eintritt in den Bündelungsabschnitt 20 von unten gegen die bereits im Bündelungsabschnitt 20 angeordneten Holzstücke 2 drücken und so eine bei der Zufuhr bzw. bei dem Eintritt in den Bündelungsabschnitt 20 bewirkte Umlagerung der bereits im Bündelungsabschnitt 20 angeordneten Holzstücke 2 hervorrufen zu können.

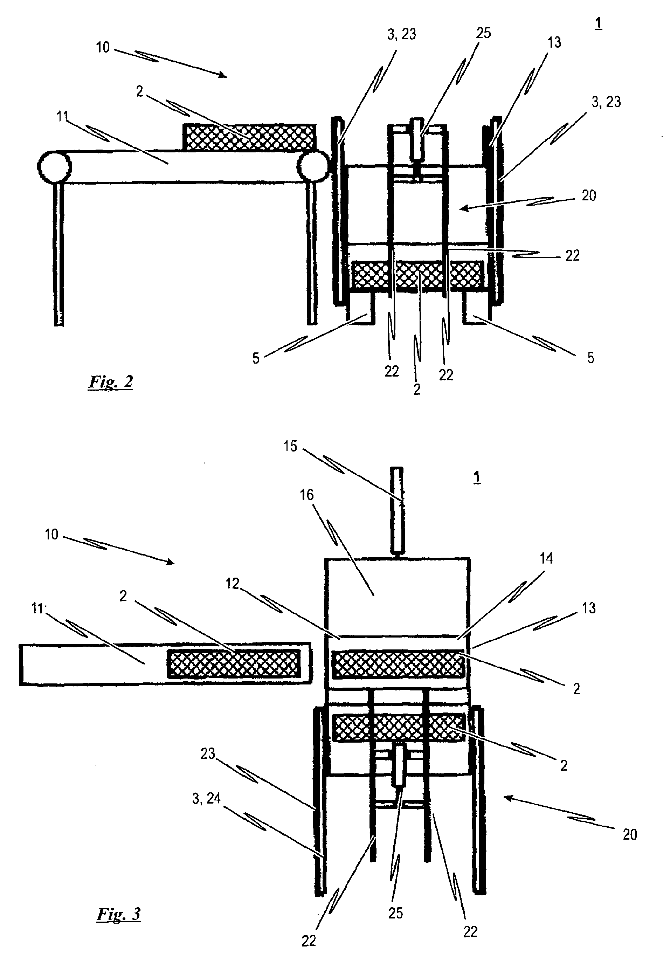

Es wird insbesondere auf Fig. 2 Bezug genommen, in welcher eine Seitenansicht in Richtung senkrecht der Längserstreckung der zu bündelnden Holzstücke 2 gezeigt ist. In dieser Darstellung befindet sich ein Holzstück auf dem Förderband 11, unmittelbar bevor es das obere Ende 12a des Falltrichters 12 passiert und mit seiner Kopfseite gegen die Anschlagplatte 13 anstößt. Des Weiteren ist in Fig. 2 zu erkennen, dass bereits ein Holzstück 2 mit dem Betätigungsmittel 15 und dem Einschubschlitten 16 in den Bündelungsabschnitt 20 geschoben wurde.

In der in Fig. 3 gezeigten Draufsicht der bevorzugten Ausführungsform der erfindungsgemäßen Holzbündelungsvorrichtung 1 ist des weiteren zu erkenn, dass ein Holzstück 2 bereits den Falltrichter 12 sowie die Anschlagplatte 13 passiert hat und im Einschubkanal 14 liegt.

Unter Bezugnahme auf die Fig. 2 und 3 wird im Folgenden die Arbeitsweise des Bündelungsabschnittes 20 näher erläutert. Der Bündelungsabschnitt 20 gemäß der dargestellten Ausführungsform setzt sich im wesentlichen aus zwei parallel zueinander angeordneten und symmetrisch aufgebauten Halteelementen 22 zusammen, deren primäre Funktion darin besteht, die mit dem Zufuhrabschnitt 10 zugeführten Holzstücke 2 in einer Bündelform anzuordnen. Im Einzelnen wird dabei die Bündelform sowie die Bündelgröße des letztendlich herzustellenden Holzbündels 4 durch die Formgebung der Halteelemente 22 bestimmt. Wie dargestellt, sind die Halteelemente 22 dieser Ausführungsform im wesentlichen sichelförmig aufgebaut, so dass demnach ein Holzbündel 4 insbesondere mit einer kreiszylindrischen Formgebung herstellbar ist. Der Innendurchmesser der bei dieser Ausführungsform sichelförmigen Halteelemente 22 entspricht dabei dem Durchmesser des zu fertigenden Holzbündels 4.

Das Halteelement 22 kann, wie noch näher erläutert werden wird aus zwei Haltegliedern, nämlich einem ersten, feststehenden Halteglied 22a und einem zweiten, öffenbarem Halteglied 22b aufgebaut sein. Die Größe des Holzbündels 4 lässt sich nun auch dadurch einstellen, dass von einem exakt zylinderförmigen Innenraum zwischen den Haltegliedern 22a, 22b, die das Halteelement 22 definieren, abgewichen wird. Insbesondere kann das bewegliche Halteglied zur Verringerung des auszubildenden Holzbündels 4 weiter geschlossen oder bei ausreichend langer Bemessung der öffenbaren Halteglieder 22b auch vergrößert werden. Somit lässt sich die Größe des gewünschten Holzbündels 4 über einen gewissen Bereich einstellen.

Ein weiteres wesentliches Bauteil, welches dem Bündelungsabschnitt 20 der erfindungsgemäßen Holzbündelungsvorrichtung 1 zuzuordnen ist, sind die beiden Seitenwangenelemente 23, die jeweils an einer der beiden Stirnseiten der durch die beiden Halteelemente 22 vorgegebenen Bündelform angeordnet sind. Die Seitenwangenelemente 23 übernehmen dabei die Funktion der Längs-Umreifung der im Bündelungsabschnitt 20 in Bündelform angeordneten Holzstücke 2. Hierzu sind die Seitenwangenelemente 23 jeweils mit einem Bandüberführungsmittel 24 versehen, was sich in bevorzugter Weise aus einer Bandaufnahmenut oder dergleichen zur Aufnahme eines in einer geschlossenen Formgebung ausgebildeten Bandmaterials 3 und aus einem entsprechend ausgeführten Freigabemittel zusammensetzt, um das in der Aufnahmenut angeordnete und in einer geschlossenen Formgebung ausgebildete Bandmaterial 3 auf die Umfangsfläche der mit den Halteelementen 22 in einer Bündelform gehaltenen Holzstücke 2 zu überführen und somit eine Längs-Umreifung dieser Bündelform zu erreichen.

Wie dargestellt, weisen die jeweiligen den Halteelementen 22 zugewandten Stirnseiten der Seitenwangenelemente 23 im wesentlichen die gleiche Formgebung wie die Querschnittsformgebung der durch die Halteelemente 22 vorgegebenen Bündelform auf. Dies ist insbesondere für eine möglichst effektive Überführung des auf dem Seitenwangenelement 23 bzw. Bandüberführungsmittel 24 vorgesehenen Bandmaterials 3 auf die Umfangsfläche der Bündelform erforderlich. Andererseits sind des weiteren die Querschnittsflächen des in einer geschlossenen Formgebung um die dem jeweiligen Halteelement 22 zugewandten Stirnseiten der Seitenwangenelemente 23 angeordneten Bandmaterials 3 symmetrisch zur Querschnittsfläche der durch die Halteelemente 22 vorgegebenen Bündelform. Auch dies hat einen positiven Einfluss auf eine möglichst störungsunempfindliche Überführung des Bandmaterials 3 auf die Umfangsfläche der Bündelform.

Hinsichtlich der Realisierung der Bandüberführungsmittel 24 bzw. der Seitenwangenelemente 23 sind mehrere alternative Ausführungsformen denkbar. Bei der dargestellten bevorzugten Ausführungsform der Erfindung weisen die Seitenwangenelement 23 einen größeren Querschnitt als die durch die Halteelemente 22 vorgegebene Bündelform auf. Da allerdings die Bandaufnahmenut des Bandüberführungsmittels 24 an der Umfangsseite der dem jeweiligen Halteelement 22 zugewandten Stirnfläche des Seitenwangenelements 23 angeordnet ist, weist somit auch das in der Bandführungsnut angeordnete Bandmaterial 3 vor der Überführung auf die Außenfläche der Bündelform einen größeren Querschnitt als die Bündelform selber auf. Hiermit kann erreicht werden, dass auf eine leicht zu realisierende aber dabei effektive Weise das Bandmaterial 3 ohne besonderen Aufwand von dem jeweiligen Seitenwangenelement 23 auf die Umfangsfläche der in einer Bündelform angeordneten Holzstücke 2 überführt werden kann. Im einzelnen, und wenn es sich bei dem zum Einsatz kommenden Bandmaterial 3 um ein elastisches Gummimaterial handelt, ist es bevorzugt, dass das Bandmaterial 3 in einem vorgespannten Zustand in der Bandführungsnut des Bandführungsmittels 24 vorliegt, so dass zum Überführen des Bandmaterials 3 auf die Umfangsfläche der in einer Bündelform angeordneten Holzstücke 2 dies lediglich durch ein Abrollen bzw. Aufschnappen des Bandmaterials 3 erfolgt. Dabei ist es bevorzugt, dass die Vorspannung des Bandmaterials 3 bzw. die jeweiligen Durchmesser der Seitenwangenelemente 23 bzw. der mit den Halteelementen 22 definierten Bündelform derart gewählt sind, dass nach dem Überführen des Bandmaterials 3 auf die Umfangsfläche der in der Bündelform angeordneten Holzstücke 2 nach wie vor eine gewisse Vorspannung vorhanden ist, um über das Bandmaterial 3 eine radial ausgerichtete Druck- bzw. Presskraft auf die in der Bündelform angeordneten Holzstücke 2 auszuüben und somit eine besonders effektive Längs-Umreifung der Bündelform zu ermöglichen.

Andererseits wäre es selbstverständlich aber auch denkbar, anstelle eines elastisch ausgeführten Bandmaterials 3 ein Bandmaterial zu wählen, das ebenfalls in einer geschlossenen Formgebung vorliegt, wobei allerdings nach der Überführung des Bandmaterials 3 von den jeweiligen Seitenwangenelementen 23 auf die Umfangsfläche der in der Bündelform angeordneten Holzstücke 2 vorzugsweise durch externe Manipulation der durch die geschlossene Formgebung des Bandmaterials 3 bestimmte Umfang entsprechend verkleinert werden kann. Hierfür würde sich als Bandmaterial 3 ein nachspannbarer Zuggurt oder dergleichen eignen.

Andererseits allerdings wäre es auch denkbar, dass die Halteelemente 22 derart ausgeführt sind, dass diese nach dem Befüllen des Bündelungsabschnittes 20 mit den zu bündelnden Holzstücken 2 eine radial ausgerichtete Presskraft auf die in Bündelform angeordneten Holzstücke 2 ausüben können, um derart den effektiven Querschnitt der Bündelform der Holzstücke 2 zu verringern und somit das Überführen des Bandmaterials 3 auf die Umfangsfläche der (mit den Halteelementen 22 zeitweise komprimierten) Bündelform zu ermöglichen. Diese Realisierung würde sich insbesondere dann anbieten, wenn als Bandmaterial 3 kein elastisches und auch kein nachspannbares Bandmaterial 3 eingesetzt wird.

Hinsichtlich der Ausführung des bereits erwähnten Freigabemittels des Bandüberführungsmittels sei angemerkt, dass es sich hierbei beispielsweise um Elemente handeln kann, die zwischen einer ersten und einer zweiten Position bewegbar sind, wobei in ihrer ersten Position das Bandmaterial 3 in der Bandführung des Bandüberführungsmittels gehalten wird, und wobei in ihrer zweiten Position das Bandmaterial 3 nicht durch diese Elemente blockiert wird und deshalb auf die Umfangsfläche der mit den Halteelementen 22 in einer Bündelform gehaltenen Holzstücke 2 überführt werden kann.

Um die Funktionsweise der dargestellten Ausführungsform der erfindungsgemäßen Holzbündelungsvorrichtung 1 näher zu erläutern, soll anschließend erneut auf Fig. 4a bis Fig. 4d Bezug genommen werden, die jeweils unterschiedliche Zustände der Holzbündelungsvorrichtung 1 gemäß den Fig. 1 bis 3 in einer schematischen Seitenansicht in Richtung parallel der Längserstreckung der zu bündelnden Holzstücke 2 zeigt.

In Fig. 4a ist ein Zustand gezeigt, in welchem insgesamt drei Holzstücke 2 in dem Einschubkanal 14 der Holzbündelungsvorrichtung 1 vorliegen. Diese Holzstücke 2 haben bereits den Falltrichter 12 sowie die Anschlagplatte 13 passiert und liegen somit in einer im Hinblick auf ihre Längserstreckung ausgerichteten Weise vor.

Fig. 4b zeigt einen Zustand, in welchem die in Fig. 4a gezeigten Holzstücke 2 mit dem zum Zufuhrabschnitt 10 gehörigen Einschubschlitten 16 durch die Öffnung 21 des Bündelungsabschnittes 20 in diesen Bündelungsabschnitt 20 geschoben wurden. Dies erfolgt, wie bereits beschrieben, insbesondere mit Hilfe eines entsprechenden Betätigungsmittels 15.

Fig. 4c zeigt einen Zustand, in welchem bereits so viele Holzstücke 2 über den Zufuhrabschnitt 10 in den Bündelungsabschnitt 20 eingeführt wurden, dass die mit den Halteelementen 22 vorgegebene Bündelform ausgefüllt ist. Anders ausgedrückt bedeutet dies, dass sämtliche Holzstücke 2 nunmehr in einer Bündelform angeordnet sind, wobei diese Bündelform im wesentlichen durch die Formgebung der Halteelemente 22 bestimmt wird. Anschließend erfolgt die Längs-Umreifung der in Bündelform angeordneten Holzstücke 2. Bei dieser Längs-Umreifung wird das Bandmaterial 3 von den jeweiligen Seitenwangenelementen 23 bzw. Bandüberführungsmitteln 24 auf die Umfangsfläche der durch die beiden Halteelemente 22 vorgegebenen Bündelform überführt.

Nach der Längs-Umreifung der in Bündelform angeordneten Holzstücke 2 ist im eigentlichen Sinne das Holzbündel 4 hergestellt. Die Entnahme des Holzbündels 4 aus dem Bündelungsabschnitt 20 erfolgt in vorteilhafter Weise durch ein Aufklappen der Halteelemente 22. Hierfür sind die Halteelemente 22 jeweils aus zumindest zwei Haltegliedern 22a, 22b aufgebaut, welche gelenkig miteinander verbunden sind. Des Weiteren ist ein den Halteelementen 22 zugeordnetes Betätigungsmittel 25, insbesondere ein hydraulisch oder pneumatisch arbeitendes Betätigungsmittel vorgesehen, welches derart angeordnet und ausgelegt ist, um die Halteglieder 22a, 22b in verschiedene Positionen zu verschwenken.

In den Fig. 1, 2, 3 und 4a bis 4c befinden sich die Halteglieder 22a, 22b in einer ersten Position, in welcher die Halteelemente 22 mit den Haltegliedern 22a, 22b die Bündelform definieren.

In Fig. 4d ist hingegen ein Zustand gezeigt, in welchem sich die Halteglieder 22a, 22b in einer verschiedenen Position (dritte Position) befinden, das heißt in einer Position, in welcher sie mit Hilfe des Betätigungsmittels 25 relativ zueinander verschwenkt wurden, um das im Bündelungsabschnitt 20 fertig gestellte Holzbündel 4 freizugeben und eine Entnahme des Holzbündels 4 aus dem Bündelungsabschnitt 20 zu ermöglichen. Diese Entnahme kann, wie dargestellt, durch ein Abrollen des Holzbündels 4 aus dem Bündelungsabschnitt 20 erfolgen. Diesbezüglich ist es erstrebenswert, die gesamte Holzbündelungsvorrichtung 1 auf einem Plateau anzuordnen, wobei der Höhenunterschied zwischen dem Plateau und dem eigentlichen Boden das Abrollen des Holzbündels 4 aus dem Bündelungsabschnitt 20 (vorzugsweise unter Zuhilfenahme einer entsprechenden Rampe 6) vereinfacht.

Andererseits wäre es ferner denkbar, dass die Halteglieder 22a, 22b mit dem dem Halteelement 22 zugeordneten Betätigungsmittel 25 in einer weiteren Position (zweite Position) relativ zueinander verschwenkbar sind, wobei in dieser weiteren Position die Halteelemente 22 mit den jeweiligen Haltegliedern 22a, 22b auf die in den Bündelungsabschnitt 20 angeordneten Holzstücke 2 eine radial ausgerichtete Presskraft ausüben, um somit zumindest zeitweilig den Querschnitt der Bündelform der in dem Bündelungsabschnitt 20 angeordneten Holzstücke 2 zu reduzieren und somit das Überführen des Bandmaterials 3 von den jeweiligen Seitenwangenelementen 23 bzw. Bandüberführungsmitteln 24 auf die Umfangsfläche der durch die Halteelemente 22 vorgegebenen Bündelform zu erleichtern.

Es sei darauf hingewiesen, dass die Ausführung der Erfindung nicht auf das in den Figuren beschriebene Ausführungsbeispiel beschränkt ist, sondern auch in einer Vielzahl von Varianten möglich ist.

### Bezugszeichenliste

- 1: Holzbündelungsvorrichtung
- 2: Holzstück
- 3: Bandmaterial
- 4: Holzbündel
- 5: Plateau
- 6: Rampe
- 10: Zufuhrabschnitt
- 11: Förderband
- 12: Falltrichter
- 12a: Oberes Ende des Falltrichters
- 12b: Unteres Ende des Falltrichters
- 13: Anschlagplatte
- 14: Einschubkanal
- 15: Betätigungsmittel
- 16: Einschubschlitten
- 20: Bündelungsabschnitt
- 21: Öffnung des Bündelungsabschnittes
- 22: Halteelement
- 22a, 22b: Halteglieder
- 23: Seitenwangenelement
- 24: Bandüberführungsmittel
- 25: Betätigungsmittel

## Patentansprüche

1. Vorrichtung zum Bündeln von Holzstücken (2), insbesondere Scheitholz, in einer vorgebbaren Bündelform und Bündelgröße, mit einem Bündelungsabschnitt (20) und einem Zufuhrabschnitt (10), wobei der Zufuhrabschnitt (10) die zu bündelnden Holzstücke (2) dem Bündelungsabschnitt (20) zuführt, und wobei der Bündelungsabschnitt (20) zumindest ein Halteelement (22) zum Anordnen der dem Bündelungsabschnitt (20) zugeführten Holzstücke (2) in einer vorgebbaren Bündelform aufweist, wobei das zumindest eine Halteelement (22) dabei die Umfangsfläche des herzustellenden Holzbündels (4) definiert,
**dadurch gekennzeichnet, dass**
der Zufuhrabschnitt (10) ausgelegt ist, die zu bündelnden Holzstücke (2) dem Bündelungsabschnitt (20) derart zuzuführen, dass die Holzstücke (2) bei der Zufuhr in der durch das zumindest eine Halteelement (22) definierten Bündelform zumindest teilweise umgelagert werden.

2. Vorrichtung nach Anspruch 1, wobei der Bündelungsabschnitt (20) eine Zufuhröffnung (21) aufweist, welche im unteren Bereich der durch das zumindest eine Halteelement (22) definierten Bündelform vorgesehen ist, und durch welche die zu bündelnden Holzstücke (2) dem Bündelungsabschnitt (20) zugeführt werden.

3. Vorrichtung nach Anspruch 1 oder 2, wobei der Zufuhrabschnitt (10) ferner ein vorzugsweise pneumatisch oder hydraulisch arbeitendes Betätigungsmittel (15) aufweist, welches ausgelegt ist, die zu bündelnden Holzstücke (2), vorzugsweise in einer translatorischen und horizontale ausgerichteten Bewegung, dem Bündelungsabschnitt (20) zuzuführen.

4. Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, wobei die dem zumindest einem Halteelement (22) zugewandte Stirnseite des Seitenwangenelements (23) im Wesentlichen die gleiche Formgebung wie die Querschnittsformgebung der durch das zumindest eine Halteelement (22) vorgegebenen Bündelform aufweist, und wobei das Bandüberführungsmittel (24) derart ausgelegt ist, ein in einer geschlossenen Formgebung um die dem Halteelement (22) zugewandten Stirnseiten des Seitenwangenelements (23) angeordnetes Bandmaterial (3) auf die Umfangsfläche der durch das zumindest eine Halteelement (22) vorgegebenen Bündelform zu überführen und somit eine Längs-Umreifung der in dem Bündelungsabschnitt (20) angeordneten Holzstücke (2) zu bewirken.

5. Vorrichtung nach Anspruch 4, wobei das Bandmaterial (3) in einer geschlossenen Formgebung um die dem Halteelement (22) zugewandten Stirnseite des Seitenwangenelements (23) angeordnet ist, wobei die Querschnittsfläche des angeordneten Bandmaterials (3) zumindest so groß wie die Querschnittsfläche der durch das zumindest eine Halteelement (22) vorgegebenen Bündelform ist, und wobei die Querschnittsfläche des Bandmaterials (3) nach dem Überführen auf die Umfangsfläche der durch das zumindest eine Halteelement (22) vorgegebenen Bündelform durch Nachspannen des Bandmaterials (3) verkleinerbar ist.

6. Vorrichtung nach Anspruch 4 oder 5, wobei das Bandmaterial (3) ein elastisches Material, insbesondere Gummimaterial oder dergleichen aufweist, wobei das Bandmaterial (3) in einer geschlossenen Formgebung um die dem Halteelement (22) zugewandten Stirnseite des Seitenwangenelements (23) unter Vorspannung aufgespannt ist, wobei die Querschnittsfläche des aufgespannten Bandmaterials (3) größer als die Querschnittsfläche der durch das zumindest eine Halteelement (22) vorgegebenen Bündelform ist, und wobei das Überführen des Bandmaterials (3) auf die Umfangsfläche der durch das zumindest eine Halteelement (22) vorgegebenen Bündelform durch ein Aufschnapp-Vorgang des vorgespannten Bandmaterials (3) erfolgt.

7. Vorrichtung nach Anspruch 4 oder 5, wobei das Bandmaterial (3) ein Kunststoff-und/oder Stahlmaterial aufweist, und wobei das Bandmaterial (3) in einer geschlossenen Formgebung um die dem Halteelement (22) zugewandten Stirnseite des Seitenwangenelements (23) aufgespannt ist, wobei die Querschnittsfläche der Formgebung des aufgespannten Bandmaterials (3) im Wesentlichen identisch mit der Querschnittsfläche der durch das zumindest eine Halteelement (22) vorgegebene Bündelform ist.

8. Vorrichtung nach Anspruch 7, wobei das zumindest eine Halteelement (22) ausgelegt ist, auf die in dem Bündelungsabschnitt (20) angeordneten Holzstücke (2) zumindest zeitweilig eine radial ausgerichtete Druck- bzw. Presskraft auszuüben, um zum Zwecke der Überführung des Bandmaterials (3) kurzzeitig die Querschnittsfläche der durch das zumindest eine Halteelement (22) vorgegebenen Bündelform zu reduzieren.

9. Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, und wobei das Bandüberführungsmittel (24) ausgelegt ist, die Querschnittsfläche des in einer geschlossenen Formgebung um die dem Halteelement (22) zugewandten Stirnseite des Seitenwangenelements (23) zwischen einem ersten und einem zweiten Wert zu variieren, wobei der erste Wert im Wesentlichen der Querschnittsfläche der durch das zumindest eine Halteelement (22) vorgegebenen Bündelform ist, und wobei der zweite Wert größer als der erste Wert ist.

10. Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, und wobei das Bandüberführungsmittel (24) zumindest eine Bandführung, insbesondere eine Band-Aufnahmenut oder dergleichen, und ein Freigabemittel zum Freigeben des in der Bandführung angeordneten Bandmaterials (3) aufweist.

11. Vorrichtung nach einem der vorhergehenden Ansprüche, wobei das zumindest eine Halteelement (22) wenigstens zwei Halteglieder (22a, 22b) und ein vorzugsweise hydraulisch oder pneumatisch arbeitendes Betätigungsmittel (25) aufweist, und wobei die Halteglieder (22a, 22b) mit dem Betätigungsmittel (25) relativ zueinander zwischen einer ersten Position, in welcher das zumindest eine Halteelement (22) mit den Haltegliedern (22a, 22b) die Bündelform definiert, und einer zweiten Position, in welcher das zumindest eine Halteelement (22) mit den Haltegliedern (22a, 22b) auf die in dem Bündelungsabschnitt (20) angeordneten Holzstücke (2) eine radial ausgerichtete Druck- bzw. Presskraft ausübt, bewegbar sind.

12. Vorrichtung nach Anspruch 11, wobei die Halteglieder (22a, 22b) mit dem Betätigungsmittel (25) ferner in eine dritte Position relativ zueinander bewegbar sind, um die in dem Bündelungsabschnitt (20) angeordneten Holzstücke (2) nach deren Längs-Umreifung freizugeben und eine Entnahme des Holzbündels (4) aus dem Bündelungsabschnitt (20) zu ermöglichen.

13. Vorrichtung nach einem der vorhergehenden Ansprüche, wobei die durch das zumindest eine Halteelement (22) vorgegebene Bündelform im Wesentlichen kreiszylindrisch ist, und wobei die Entnahme des Holzbündels (4) aus dem Bündelungsabschnitt (20) vorzugsweise durch ein Abrollen des Holzbündels (4) erfolgt.

14. Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, wobei die dem zumindest einem Halteelement (22) zugewandte Stirnseite des Seitenwangenelements (23) im Wesentlichen die gleiche Formgebung wie die Querschnittsformgebung der durch das zumindest eine Halteelement (22) vorgegebenen Bündelform aufweist, und wobei das Bandüberführungsmittel (24) derart ausgelegt ist, ein in einer geschlossenen Formgebung um die dem Halteelement (22) zugewandten Stirnseiten des Seitenwangenelements (23) angeordnetes Bandmaterial (3) auf die Umfangsfläche der durch das zumindest eine Halteelement (22) vorgegebenen Bündelform zu überführen und somit eine Längs-Umreifung der in dem Bündelungsabschnitt (20) angeordneten Holzstücke (2) zu bewirken, und wobei die Querschnittsfläche des in einer geschlossenen Formgebung um die dem Halteelement (22) zugewandten Stirnseite des Seitenwangenelements (23) angeordneten Bandmaterials (3) symmetrisch zur Querschnittsfläche der durch das zumindest eine Halteelement (22) vorgegebenen Bündelform ist.

15. Vorrichtung nach einem der vorhergehenden Ansprüche, wobei der Zufuhrabschnitt (10) einen Ausrichtungsabschnitt (12, 13) aufweist, in welchem die zu bündelnden Holzstücke (2) hinsichtlich ihrer Längsrichtung ausgerichtet werden, und ferner einen im Bündelungsabschnitt (20) mündenden Einschubkanal (14) aufweist, über den die ausgerichteten Holzstücke (2) dem Bündelungsabschnitt (20), vorzugsweise in einer translatorischen und horizontal ausgerichteten Bewegung zugeführt werden.

16. Vorrichtung nach Anspruch 15, wobei der Zufuhrabschnitt (10) ferner ein vorzugsweise pneumatisch oder hydraulisch arbeitendes Betätigungsmittel (15) aufweist, welches ausgelegt ist, die dem Ausrichtungsabschnitt (12, 13) ausgerichteten Holzstücke (2) durch den Einschubkanal (14) dem Bündelungsabschnitt (20), vorzugsweise in einer translatorischen und horizontal ausgerichteten Bewegung zuzuführen.

17. Vorrichtung nach Anspruch 15 oder 16, wobei der Ausrichtungsabschnitt (12, 13) zumindest eine Anschlagplatte (13) aufweist, gegen die die zu bündelnden Holzstücke (2) mit ihrem einen Ende anstoßen und derart ausgerichtet werden.

18. Vorrichtung nach einem der Ansprüche 15 bis 17, wobei der Zufuhrabschnitt (10) ein Förderband (11) oder dergleichen aufweist, über welches die zu bündelnden Holzstücke (2) dem Ausrichtungsabschnitt (12, 13) zugeführt werden, und wobei der Ausrichtungsabschnitt (12, 13) einen Falltrichter (12) aufweist, dessen unteres Ende (12b) mit dem Einschubkanal (14) verbunden ist, und an dessen oberen Ende (12a) die Anschlagplatte (13) vorgesehen ist, so dass die über das Förderband (11) zugeführten Holzstücke (2) beim Eintritt in den Falltrichter (12) an der Anschlagplatte (13) ausgerichtet und anschließend dem Einschubkanal (14) zugeführt werden.

## Geänderte Patentansprüche

### Geänderte Patentansprüche gemäss Regel 137(2) EPÜ.

**1.** Vorrichtung zum Bündeln von Holzstücken (2), insbesondere Scheitholz, in einer vorgebbaren Bündelform und Bündelgröße, mit einem Bündelungsabschnitt (20) und einem Zufuhrabschnitt (10), wobei der Zufuhrabschnitt (10) die zu bündelnden Holzstücke (2) dem Bündelungsabschnitt (20) zuführt, und wobei der Bündelungsabschnitt (20) zumindest ein Halteelement (22) zum Anordnen der dem Bündelungsabschnitt (20) zugeführten Holzstücke (2) in einer vorgebbaren Bündelform aufweist, wobei das zumindest eine Halteelement (22) dabei die Umfangsfläche des herzustellenden Holzbündels (4) definiert,
**dadurch gekennzeichnet, dass**
der Zufuhrabschnitt (10) ausgelegt ist, die zu bündelnden Holzstücke (2) dem Bündelungsabschnitt (20) über eine im unteren Bereich der durch das zumindest eine Halteelement (22) definierten Bündelform vorgesehenen Zuführöffnung (21) derart zuzuführen, dass die Holzstücke (2) bei der Zufuhr in der durch das zumindest eine Halteelement (22) definierten Bündelform zumindest teilweise umgelagert werden.

**2.** Vorrichtung nach Anspruch 1, wobei der Zufuhrabschnitt (10) ferner ein vorzugsweise pneumatisch oder hydraulisch arbeitendes Betätigungsmittel (15) aufweist, welches ausgelegt ist, die zu bündelnden Holzstücke (2), vorzugsweise in einer translatorischen und horizontale ausgerichteten Bewegung, dem Bündelungsabschnitt (20) zuzuführen.

**3.** Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, wobei die dem zumindest einem Halteelement (22) zugewandte Stirnseite des Seitenwangenelements (23) im Wesentlichen die gleiche Formgebung wie die Querschnittsformgebung der durch das zumindest eine Halteelement (22) vorgegebenen Bündelform aufweist, und wobei das Bandüberführungsmittel (24) derart ausgelegt ist, ein in einer geschlossenen Formgebung um die dem Halteelement (22) zugewandten Stirnseiten des Seitenwangenelements (23) angeordnetes Bandmaterial (3) auf die Umfangsfläche der durch das zumindest eine Halteelement (22) vorgegebenen Bündelform zu überführen und somit eine Längs-Umreifung der in dem Bündelungsabschnitt (20) angeordneten Holzstücke (2) zu bewirken.

**4.** Vorrichtung nach Anspruch 3, wobei das Bandmaterial (3) in einer geschlossenen Formgebung um die dem Halteelement (22) zugewandten Stirnseite des Seitenwangenelements (23) angeordnet ist, wobei die Querschnittsfläche des angeordneten Bandmaterials (3) zumindest so groß wie die Querschnittsfläche der durch das zumindest eine Halteelement (22) vorgegebenen Bündelform ist, und wobei die Querschnittsfläche des Bandmaterials (3) nach dem Überführen auf die Umfangsfläche der durch das zumindest eine Halteelement (22) vorgegebenen Bündelform durch Nachspannen des Bandmaterials (3) verkleinerbar ist.

**5.** Vorrichtung nach Anspruch 3 oder 4, wobei das Bandmaterial (3) ein elastisches Material, insbesondere Gummimaterial oder dergleichen aufweist, wobei das Bandmaterial (3) in einer geschlossenen Formgebung um die dem Halteelement (22) zugewandten Stirnseite des Seitenwangenelements (23) unter Vorspannung aufgespannt ist, wobei die Querschnittsfläche des aufgespannten Bandmaterials (3) größer als die Querschnittsfläche der durch das zumindest eine Halteelement (22) vorgegebenen Bündelform ist, und wobei das Überführen des Bandmaterials (3) auf die Umfangsfläche der durch das zumindest eine Halteelement (22) vorgegebenen Bündelform durch ein Aufschnapp-Vorgang des vorgespannten Bandmaterials (3) erfolgt.

**6.** Vorrichtung nach Anspruch 3 oder 4, wobei das Bandmaterial (3) ein Kunststoff-und/oder Stahlmaterial aufweist, und wobei das Bandmaterial (3) in einer geschlossenen Formgebung um die dem Halteelement (22) zugewandten Stirnseite des Seitenwangenelements (23) aufgespannt ist, wobei die Querschnittsfläche der Formgebung des aufgespannten Bandmaterials (3) im Wesentlichen identisch mit der Querschnittsfläche der durch das zumindest eine Halteelement (22) vorgegebene Bündelform ist.

**7.** Vorrichtung nach Anspruch 6, wobei das zumindest eine Halteelement (22) ausgelegt ist, auf die in dem Bündelungsabschnitt (20) angeordneten Holzstücke (2) zumindest zeitweilig eine radial ausgerichtete Druck- bzw. Presskraft auszuüben, um zum Zwecke der Überführung des Bandmaterials (3) kurzzeitig die Querschnittsfläche der durch das zumindest eine Halteelement (22) vorgegebenen Bündelform zu reduzieren.

**8.** Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, und wobei das Bandüberführungsmittel (24) ausgelegt ist, die Querschnittsfläche des in einer geschlossenen Formgebung um die dem Halteelement (22) zugewandten Stirnseite des Seitenwangenelements (23) zwischen einem ersten und einem zweiten Wert zu variieren, wobei der erste Wert im Wesentlichen der Querschnittsfläche der durch das zumindest eine Halteelement (22) vorgegebenen Bündelform ist, und wobei der zweite Wert größer als der erste Wert ist.

**9.** Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, und wobei das Bandüberführungsmittel (24) zumindest eine Bandführung, insbesondere eine Band-Aufnahmenut oder dergleichen, und ein Freigabemittel zum Freigeben des in der Bandführung angeordneten Bandmaterials (3) aufweist.

**10.** Vorrichtung nach einem der vorhergehenden Ansprüche, wobei das zumindest eine Halteelement (22) wenigstens zwei Halteglieder (22a, 22b) und ein vorzugsweise hydraulisch oder pneumatisch arbeitendes Betätigungsmittel (25) aufweist, und wobei die Halteglieder (22a, 22b) mit dem Betätigungsmittel (25) relativ zueinander zwischen einer ersten Position, in welcher das zumindest eine Halteelement (22) mit den Haltegliedern (22a, 22b) die Bündelform definiert, und einer zweiten Position, in welcher das zumindest eine Halteelement (22) mit den Haltegliedern (22a, 22b) auf die in dem Bündelungsabschnitt (20) angeordneten Holzstücke (2) eine radial ausgerichtete Druck- bzw. Presskraft ausübt, bewegbar sind.

**11.** Vorrichtung nach Anspruch 10, wobei die Halteglieder (22a, 22b) mit dem Betätigungsmittel (25) ferner in eine dritte Position relativ zueinander bewegbar sind, um die in dem Bündelungsabschnitt (20) angeordneten Holzstücke (2) nach deren Längs-Umreifung freizugeben und eine Entnahme des Holzbündels (4) aus dem Bündelungsabschnitt (20) zu ermöglichen.

**12.** Vorrichtung nach einem der vorhergehenden Ansprüche, wobei die durch das zumindest eine Halteelement (22) vorgegebene Bündelform im Wesentlichen kreiszylindrisch ist, und wobei die Entnahme des Holzbündels (4) aus dem Bündelungsabschnitt (20) vorzugsweise durch ein Abrollen des Holzbündels (4) erfolgt.

**13.** Vorrichtung nach einem der vorhergehenden Ansprüche, wobei der Bündelungsabschnitt (20) ferner an zumindest einer der beiden Stirnseiten der durch das zumindest eine Halteelement (22) vorgegebenen Bündelform ein Seitenwangenelement (23) mit einem Bandüberführungsmittel (24) aufweist, wobei die dem zumindest einem Halteelement (22) zugewandte Stirnseite des Seitenwangenelements (23) im Wesentlichen die gleiche Formgebung wie die Querschnittsformgebung der durch das zumindest eine Halteelement (22) vorgegebenen Bündelform aufweist, und wobei das Bandüberführungsmittel (24) derart ausgelegt ist, ein in einer geschlossenen Formgebung um die dem Halteelement (22) zugewandten Stirnseiten des Seitenwangenelements (23) angeordnetes Bandmaterial (3) auf die Umfangsfläche der durch das zumindest eine Halteelement (22) vorgegebenen Bündelform zu überführen und somit eine Längs-Umreifung der in dem Bündelungsabschnitt (20) angeordneten Holzstücke (2) zu bewirken, und wobei die Querschnittsfläche des in einer geschlossenen Formgebung um die dem Halteelement (22) zugewandten Stirnseite des Seitenwangenelements (23) angeordneten Bandmaterials (3) symmetrisch zur Querschnittsfläche der durch das zumindest eine Halteelement (22) vorgegebenen Bündelform ist.

**14.** Vorrichtung nach einem der vorhergehenden Ansprüche, wobei der Zufuhrabschnitt (10) einen Ausrichtungsabschnitt (12, 13) aufweist, in welchem die zu bündelnden Holzstücke (2) hinsichtlich ihrer Längsrichtung ausgerichtet werden, und ferner einen im Bündelungsabschnitt (20) mündenden Einschubkanal (14) aufweist, über den die ausgerichteten Holzstücke (2) dem Bündelungsabschnitt (20), vorzugsweise in einer translatorischen und horizontal ausgerichteten Bewegung zugeführt werden.

**15.** Vorrichtung nach Anspruch 14, wobei der Zufuhrabschnitt (10) ferner ein vorzugsweise pneumatisch oder hydraulisch arbeitendes Betätigungsmittel (15) aufweist, welches ausgelegt ist, die dem Ausrichtungsabschnitt (12, 13) ausgerichteten Holzstücke (2) durch den Einschubkanal (14) dem Bündelungsabschnitt (20), vorzugsweise in einer translatorischen und horizontal ausgerichteten Bewegung zuzuführen.

**16.** Vorrichtung nach Anspruch 14 oder 15, wobei der Ausrichtungsabschnitt (12, 13) zumindest eine Anschlagplatte (13) aufweist, gegen die die zu bündelnden Holzstücke (2) mit ihrem einen Ende anstoßen und derart ausgerichtet werden.

**17.** Vorrichtung nach einem der Ansprüche 14 bis 16, wobei der Zufuhrabschnitt (10) ein Förderband (11) oder dergleichen aufweist, über welches die zu bündelnden Holzstücke (2) dem Ausrichtungsabschnitt (12, 13) zugeführt werden, und wobei der Ausrichtungsabschnitt (12, 13) einen Falltrichter (12) aufweist, dessen unteres Ende (12b) mit dem Einschubkanal (14) verbunden ist, und an dessen oberen Ende (12a) die Anschlagplatte (13) vorgesehen ist, so dass die über das Förderband (11) zugeführten Holzstücke (2) beim Eintritt in den Falltrichter (12) an der Anschlagplatte (13) ausgerichtet und anschließend dem Einschubkanal (14) zugeführt werden.
